# FASCICULE DE BREVET EUROPEEN

(11) **EP 1 029 223 B1**
(45) Date de publication et mention de la délivrance du brevet: **27.02.2002**
(21) Numéro de dépôt: 98952828.6
(22) Date de dépôt: 30.10.1998
(51) Int. Cl.: G01F 1/32, G01F 1/66, G01F 15/00

(54) **COMPTEUR DE FLUIDE A COMPACITE AMELIOREE**
FLÜSSIGKEITSSTRÖMUNGSMESSER MIT VERBESSERTER KOMPAKTHEIT
FLUID METER WITH IMPROVED COMPACTNESS

(30) Priorité: 04.11.1997 FR 9713934
(43) Date de publication de la demande: 23.08.2000
(73) Titulaire: SCHLUMBERGER INDUSTRIES S.A., 92120 Montrouge (FR)
(72) Inventeur: HERNOUX, Luc, Seneca, SC 29672 (US); GUIZOT, Jean-Luc, F-94220 Charenton (FR)
(74) Mandataire: Dupont, Henri
(86) Numéro de dépôt international: FR9802332
(87) Numéro de publication internationale: WO9923458

(56) Documents cités:
- EP-A- 0 306 193
- WO-A-95/35448
- WO-A-97/22854
- US-A- 4 140 012
- SCHNEIDER H J: "ACHEMA '79: BETRIEBSMESSGERAETE UND MESSUMFORMER" REGELUNGS-TECHNISCHE PRAXIS, vol. 21, no. 9, septembre 1979, pages 241-249, XP002056635

## Description

L'invention est relative à un compteur de fluide comprenant une paroi extérieure d'épaisseur déterminée sur laquelle une bride raccordée à une canalisation est fixée par l'intermédiaire d'organes de fixation qui pénètrent dans des trous aménagés respectivement dans l'épaisseur de ladite bride et de ladite paroi extérieure en vue de l'installation dudit compteur sur ladite canalisation, ledit compteur comprenant une ouverture pour l'amenée du fluide qui est aménagée dans la paroi extérieure et derrière laquelle est prévue une chambre dite d'amenée dans laquelle s'écoule le fluide issu de l'ouverture d'amenée.

Dans de tels compteurs de fluide l'écoulement provenant de l'ouverture d'amenée et qui circule dans la chambre d'amenée peut véhiculer des perturbations telles que des structures tourbillonnaires qui sont transportées jusque dans l'unité de mesure.

L'unité de mesure qui est par exemple constituée d'un oscillateur fluidique ou qui est de type ultrasonore ou bien encore du type à obstacle avec un détachement alternatif de tourbillons suivant une fréquence proportionnelle au débit de l'écoulement est sensible aux structures tourbillonnaires perturbatrices véhiculées par l'écoulement et qui peuvent induire des erreurs de mesure.

Le document SCHNEIDER H.J: "ACHEMA' 79: BETRIEBSMESSGERAETE UND MESSUMFORMER" REGELUNGS-TECHNISCHE PRAXIS, vol 21, no. 9, septembre 1979, pages 241-249, XP002056635 décrit un compteur de fluide dans lequel le fluide est divisé par un obstacle et s'écoule alternativement dans un canal latéral ou dans un autre avant de continuer à s'écouler dans le canal.

Le document US-A-4 140 012 décrit un compteur de fluide comprenant un tube placé perpendiculairement par rapport à la direction d'entrée et de sortie du fluide dans une chambre, ce tube étant maintenu par une paroi qui divise la chambre en deux parties. Le fluide ne peut passer d'une partie à l'autre que par l'intermédiaire de ce tube au niveau duquel sont placés les capteurs.

La présente invention a pour but de remédier à ce problème en proposant un compteur de fluide comprenant une paroi extérieure d'épaisseur déterminée sur laquelle une bride raccordée à une canalisation est fixée par l'intermédiaire d'organes de fixation qui pénètrent dans des trous aménagés respectivement dans l'épaisseur de ladite bride et de ladite paroi extérieure en vue de l'installation dudit compteur sur ladite canalisation, ledit compteur comprenant une ouverture pour l'amenée du fluide qui est aménagée dans la paroi extérieure et derriere laquelle est prévue une chambre dite d'amenée dans laquelle s'écoule le fluide issu de l'ouverture d'amenée, caractérisé en ce que le compteur de fluide comprend en outre des plots disposés à l'intérieur de la chambre d'amenée de manière à modifier l'écoulement de fluide et dans lesquels des perforations internes sont prévues dans l'alignement des trous pour les organes de fixation afin de recevoir une partie desdits organes de fixation.

Les structures tourbillonnaires présentes dans l'écoulement circulant dans la chambre d'amenée vont rencontrer ces plots et être détruites, empêchant ainsi la propagation de telles structures dans l'unité de mesure du compteur.

L'invention permet également de réduire l'encombrement du compteur en diminuant considérablement l'épaisseur de la paroi extérieure du compteur dans laquelle sont insérés les organes de fixation puisque ceux-ci se prolongent désormais à l'intérieur des plots disposés dans la chambre d'amenée au lieu d'être uniquement logés dans une paroi extérieure du compteur plus épaisse.

Selon l'invention, le compteur de fluide peut également comprendre une deuxième paroi extérieure opposée à la première, d'épaisseur déterminée, et sur laquelle une autre bride raccordée à une autre canalisation est fixée par l'intermédiaire d'organes de fixation qui pénètrent dans des trous aménagés respectivement dans l'épaisseur de ladite bride et de ladite paroi extérieure en vue de l'installation dudit compteur sur ladite canalisation, ledit compteur comprenant également une ouverture pour l'évacuation du fluide hors du compteur qui est aménagée dans la deuxième paroi extérieure derrière laquelle est prévue une chambre dite d'évacuation dans laquelle s'écoule le fluide avant de s'échapper par ladite ouverture d'évacuation, le compteur de fluide comprenant en outre des plots disposés à l'intérieur de la chambre d'évacuation de manière à modifier l'écoulement de fluide, et dans lesquels des perforations internes sont prévues dans l'alignement des trous pour les organes de fixation afin de recevoir une partie desdits organes de fixation.

Ainsi, l'encombrement du compteur peut encore être réduit entre les brides en diminuant considérablement l'épaisseur de l'autre paroi extérieure du compteur dans laquelle sont insérés les organes de fixation puisque ceux-ci se prolongent à l'intérieur des plots disposés dans la chambre d'évacuation.

Selon une caractéristique, le compteur de fluide comprend une paroi intérieure disposée en vis-à-vis de l'une des parois extérieures, et servant à diriger l'écoulement de fluide selon au moins une direction sensiblement parallèle à ladite paroi.

Cette paroi peut être disposée sensiblement perpendiculairement à la direction de l'écoulement du fluide débouchant de l'ouverture d'amenée.

Les plots sont disposés sensiblement perpendiculairement à la paroi intérieure.

Selon d'autres caractéristiques :
- au moins une partie des plots de la chambre d'amenée ou d'évacuation sont profilés dans une direction parallèle à la paroi intérieure et qui correspond à la direction de l'écoulement de fluide circulant dans ladite chambre,
- la hauteur des plots est comprise entre 0,5d et d ,où d correspond à l'écartement entre les parois intérieure et extérieure définissant la hauteur de la chambre d'amenée ou d'évacuation,
- les plots sont répartis sur une même circonférence,
- l'ouverture d'amenée ou d'évacuation est disposée à l'intérieur de ladite circonférence,
- un (ou plusieurs) orifice(s) est (sont) prévu(s) dans la chambre d'amenée pour permettre à l'écoulement de fluide de sortir de ladite chambre d'amenée,
- selon, une vue dans un plan parallèle à la paroi intérieure, au moins une partie des plots sont profilés en direction de(s) l'orifice(s) de sortie de la chambre d'amenée,
- selon une vue dans un plan parallèle à la paroi intérieure, au moins une partie des plots présentent une portion en forme de pointe tournée vers l'(es)orifice(s) de sortie de la chambre d'amenée,
- selon une vue dans un plan parallèle à la paroi intérieure l'orifice(s) est (sont) disposé(s) en dehors de la circonférence.

Selon une vue dans un plan parallèle à la paroi intérieure, au moins une partie des plots présentent une portion en forme de pointe tournée vers l'ouverture d'évacuation de la chambre d'évacuation, l'orientation de chacun desdits plots profilés étant définie par un axe passant par le centre dudit plot et par sa pointe et les axes de ces plots convergeant vers un point décalé du centre de l'ouverture d'évacuation et situé entre lesdits plots et ledit centre de l'ouverture d'évacuation.

Avantageusement, pour réduire d'une manière très importante l'encombrement du compteur de fluide selon l'invention qui comprend une unité de mesure, celle-ci est disposée sensiblement perpendiculairement à la direction d'alignement des ouvertures d'amenée et d'évacuation du fluide.

Le compteur de fluide peut comprendre une unité de mesure constituée d'un oscillateur fluidique ou qui est de type ultrasonore.

D'autres caractéristiques et avantages apparaîtront au cours de la description qui va suivre, donnée uniquement à titre d'exemple et faite en référence aux dessins annexés, sur lesquels :
- la figure 1 est une vue en perspective d'un compteur de fluide selon l'invention,
- la figure 2 est une vue schématique simplifiée en coupe transversale du compteur de la figure 1,
- la figure 3 est une vue agrandie de la partie latérale 30 du compteur de la figure 2 dans un plan de coupe passant par deux plots,
- la figure 4 est une vue schématique partielle du compteur de la figure 2 suivant D-D,
- la figure 5 est une vue en perspective de l'intérieur de l'unité de mesure du compteur de la figure 1,
- la figure 6 est une vue en coupe du compteur de la figure 2 suivant E-E,
- la figure 7 est une vue en perspective de la partie latérale 32 du compteur de fluide selon l'invention et qui est rapportée sur l'unité de mesure représentée à la figure 5,
- la figure 8 est une vue d'une variante de réalisation de l'invention.

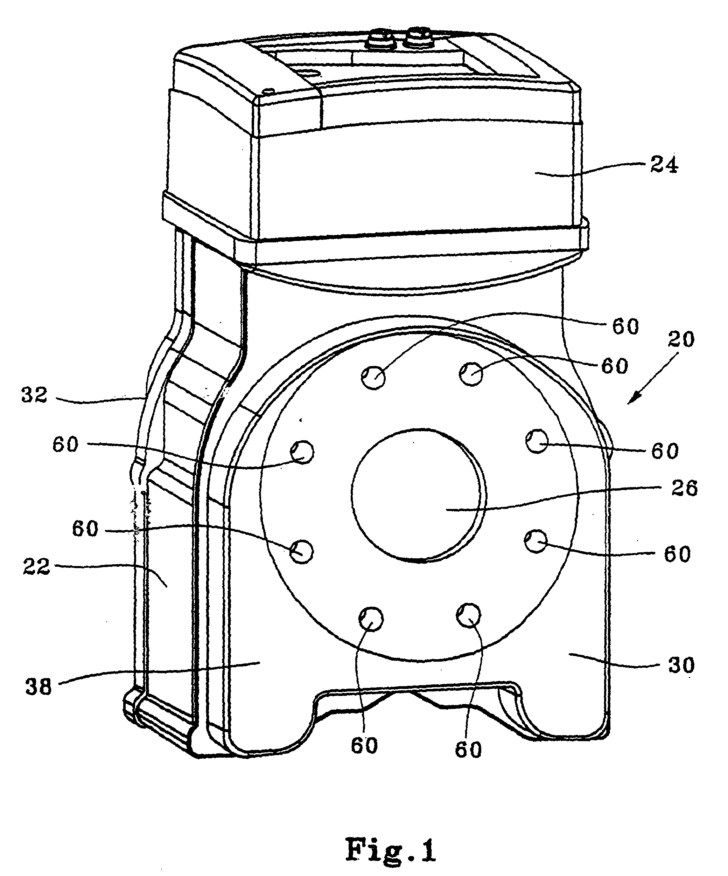

Comme représenté à la figure 1 et désigné par la référence générale notée 20 un compteur de gaz selon l'invention comprend un corps 22 sur lequel est monté un totalisateur 24.

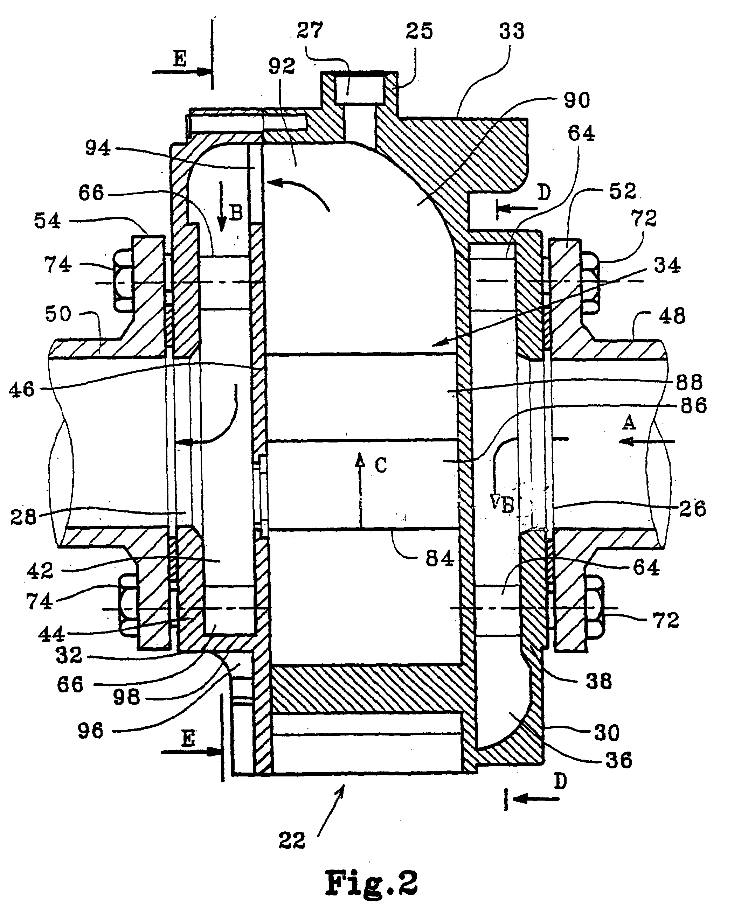

Sur les figures 2, 3 et 5 un conduit 25 perforé d'un trou 27 est aménagé à la partie supérieure du corps 22 pour permettre le passage des connexions électriques entre ledit corps et le totalisateur 24.

Le corps comporte une ouverture 26 pour l'amenée du fluide dans le compteur selon une première direction repérée par la flèche notée A et qui sera par la suite référencée "direction A".

La figure 2 montre également une autre ouverture 28 pour l'évacuation du fluide hors du compteur et qui est alignée avec l'ouverture d'amenée 26 selon cette même direction A.

Le corps du compteur comporte deux parties latérales 30, 32 qui encadrent un bloc central 33 incluant une unité de mesure 34, ainsi que représenté sur la figure 2.

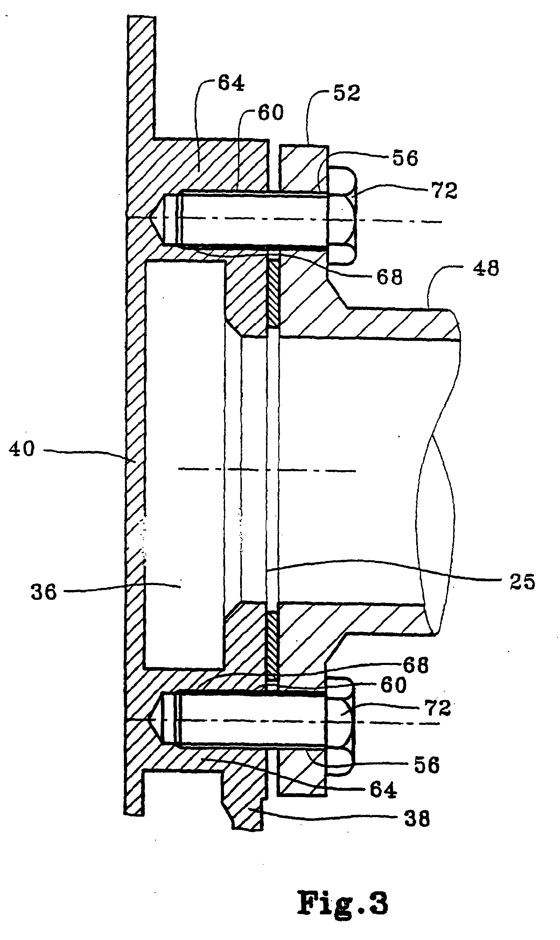

La partie latérale 30 définit à l'intérieur une chambre 36 dite d'amenée représentée sur les figures 2 et 3.

Cette chambre est délimitée par une paroi extérieure 38 dans laquelle l'ouverture 26 est aménagée et par une autre paroi intérieure 40 disposée en regard.

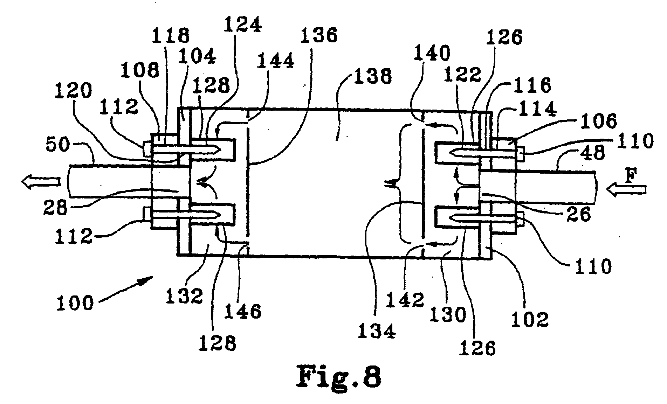

La partie latérale 32 définit à l'intérieur une chambre 42 dite d'évacuation représentée sur les figures 2 et 7.

Cette chambre est délimitée par une paroi extérieure 44, opposée à la paroi extérieure 38 et dans laquelle est aménagée l'ouverture d'évacuation 28, et par une autre paroi dite intérieure 46 disposée en regard.

Le compteur 20 est installé entre deux canalisations 48,50 qui sont chacune équipées d'une bride 52, 54 dans lesquelles respectivement plusieurs trous (par exemple huit trous) 56 sont pratiqués dans l'épaisseur desdites brides sur une même circonférence.

Chaque paroi extérieure 38, 44 du compteur est placée respectivement au contact de la bride 52, 54 et présente également huit trous 60 (fig.1) disposés suivant une même circonférence, dans l'épaisseur de ladite paroi, et dans l'alignement des trous 56 des brides (figs.2 et 3).

Plusieurs plots 64, 66 (huit), représentés sur les figures 2, 3, 4 et 7 sont respectivement disposés dans les chambres d'amenée 36 et d'évacuation 42 sensiblement perpendiculairement aux parois intérieures 40, 46 et extérieures 38, 44.

Ces plots sont disposés dans l'alignement des trous 56, 60 de la bride 52 (resp.54) associée à la paroi extérieure 38 (resp.44) et présentent des perforations internes 68 (resp.70) alignées avec lesdits trous 56, 60, ainsi que représenté sur la figure 3.

Lorsque l'on souhaite solidariser le compteur 20 aux canalisations 48, 50 des organes de fixation telles que des vis 72 (resp.74) sont engagées dans les trous 56, 60 et dans les perforations internes 68 (resp.70), ces dernières recevant une partie d'extrémité des vis de fixation, ainsi que représenté à la figure 3.

Par conséquent, cette disposition avantageuse permet d'avoir des parois extérieures 38,44 d'épaisseurs fortement diminuées par rapport à la configuration dans laquelle les vis de fixation ne débouchent pas dans les chambres d'amenée et d'évacuation et ainsi la dimension du compteur entre les ouvertures d'amenée 26 et d'évacuation 28 est réduite.

A titre d'exemple, les épaisseurs des parois extérieures sont passées de 38,6mm à 12,6mm.

Il convient de noter que l'on peut se contenter de diminuer de cette façon l'épaisseur de la paroi extérieure 38 tout en laissant la paroi extérieure 44 d'épaisseur normale, ou l'inverse, lorsque les contraintes d'encombrement le permettent.

En outre, le fait de ne pas offrir de résistance à l'écoulement à la sortie du compteur permet de ne pas accroître les pertes de charge dans le compteur.

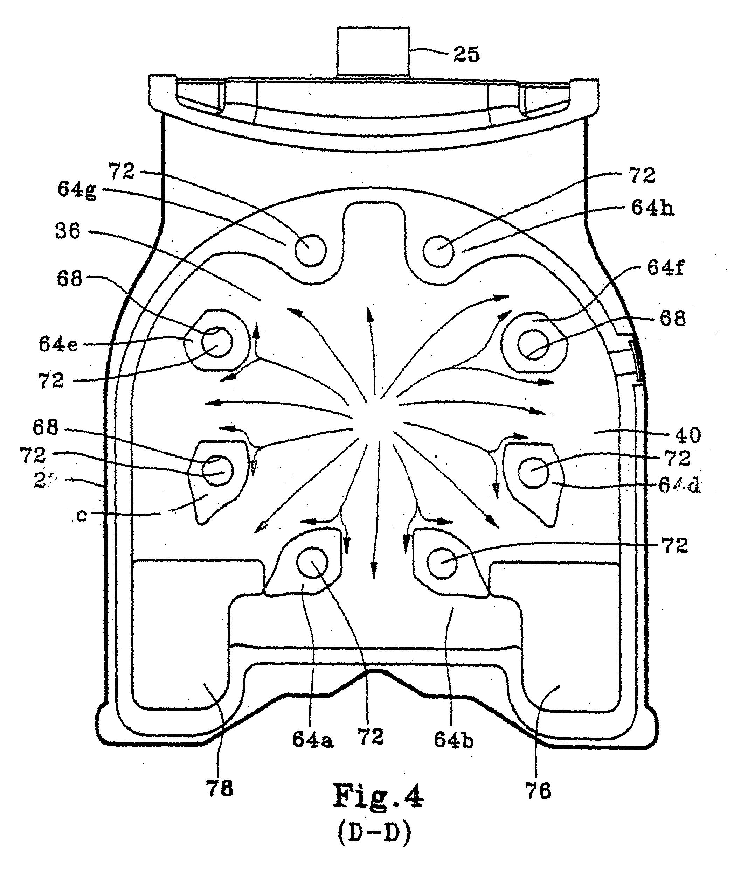

L'écoulement de fluide provenant de l'ouverture d'amenée 26 se heurte à la paroi intérieure 40 (figs.2 et 4) et est fractionné dans la chambre d'amenée 36 dans plusieurs directions sensiblement parallèles à ladite paroi, comme indiqué par les flèches de la figure 4.

Une partie de cet écoulement fractionné rencontre les surfaces extérieures des plots 64 disposées perpendiculairement à la direction de cet écoulement ,subit un nouveau fractionnement et contourne ensuite lesdits plots en empruntant les passages entre les plots qui sont laissés libres à l'écoulement.

Une autre partie de cet écoulement fractionné emprunte directement ces passages entre les plots 64.

En raison de la présence des plots et des passages de sections restreintes pour l'écoulement entre lesdits plots les perturbations (structures tourbillonnaires, dissymétries de l'écoulement...) présentes dans l'écoulement à son entrée dans la chambre d'amenée sont détruites.

Ces plots 64a-h permettent ainsi de canaliser l'écoulement fractionné vers deux orifices de sortie 76, 78 de la chambre d'amenée 36 qui sont aménagés dans la paroi 40.

Pour améliorer le guidage de l'écoulement fractionné les plots sont profilés suivant une direction parallèle à la paroi intérieure 40, en direction des orifices de sortie 76, 78.

Les plots 64a-d qui sont placés le plus près des orifices 76, 78 présentent une portion dite aval en forme de pointe qui est tournée vers le centre de l'orifice le plus proche, alors que les plots 64e et 64f, plus éloignés, ne comportent pas un tel profilé.

Cependant, les plots 64e et f pourraient être profilés pour améliorer davantage le guidage de l'écoulement.

Dans une configuration ne comportant que quatre plots (non représentée) il es par contre nécessaire que tous les plots soient profilés.

Il n'est pas nécessaire de permettre à l'écoulement de contourner les plots 64g,h car dans cette partie de la chambre d'amenée l'écoulement est peu présent.

Préférentiellement, les sections de passage transversales entre les couples de plots consécutifs 64a,b, 64c,e, 64d,f sont droites afin d'avoir la section de passage la plus grande possible.

Par contre, les sections de passage entre les couples de plots 64a,c et 64b,d sont profilées de manière à accélérer l'écoulement car les passages situés entre chacun des plots d'un même couple sont directement orientés vers l'un des orifices 76, 78.

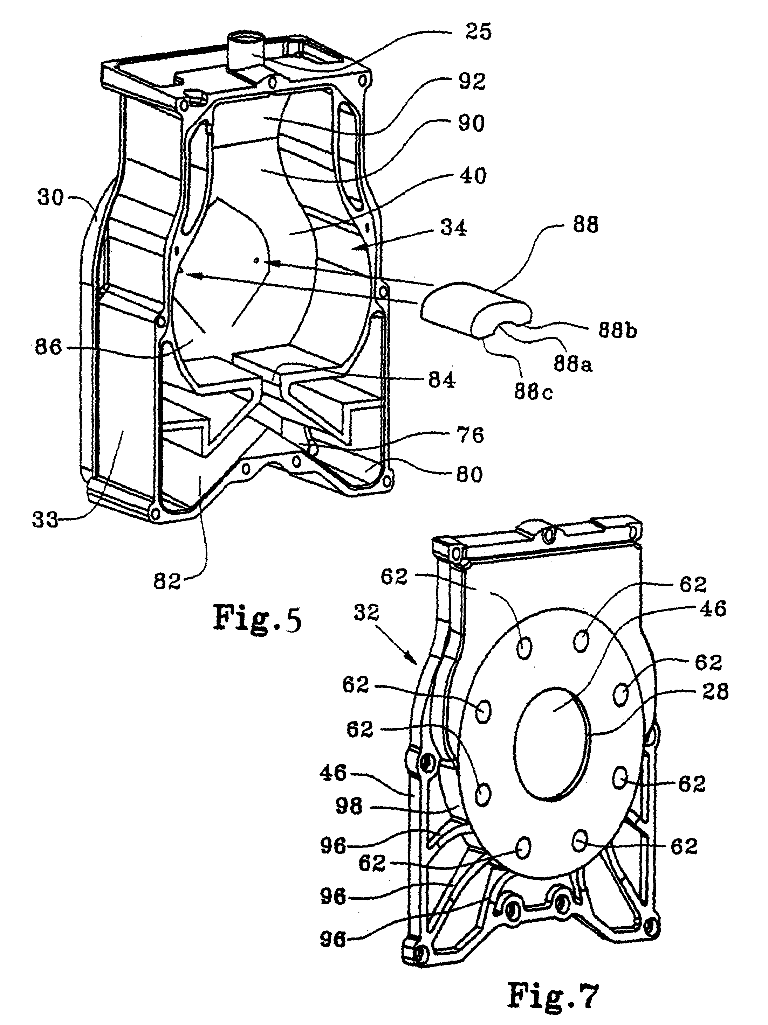

Comme représenté sur la figure 5, deux passages 80, 82 prolongent respectivement les orifices 76, 78 et dirigent les fractions d'écoulement de fluide en les faisant converger vers l'entrée 84 de l'unité de mesure 34. Cette entrée a la forme générale d'une fente allongée suivant la direction A.

A titre de variante, ces deux passages 80, 82 pourraient être remplacés par un seul passage prolongeant un seul orifice (au lieu des deux orifices 76, 78) qui serait disposé par exemple entre les deux orifices actuels 76, 78.

Le fluide à l'entrée 84 de l'unité de mesure s'écoule dans un sens opposé à celui du fluide dans la chambre 36 (flèche B), selon la deuxième direction repérée par la flèche notée C sur la figure 2 et qui est perpendiculaire à la première direction A.

L'unité de mesure 34 comprend une chambre d'oscillation 86 (figs.2 et 5) dans laquelle un obstacle 88 est positionné suivant les deux flèches indiquées sur la figure 5 en vis-à-vis de l'entrée 84.

L'obstacle présente une forme générale allongée suivant la direction A.

L'obstacle possède dans sa partie frontale qui fait face à la fente 84 une cavité centrale 88a et deux faces latérales 88b, 88c qui encadrent cette dernière et qui sont contenues dans un même plan perpendiculaire à la direction C.

Le fluide débouchant dans la chambre d'oscillation et rencontrant la partie frontale de l'obstacle 88, oscille transversalement par rapport à la direction C dans un plan parallèle à la paroi 40 et s'écoule alternativement de part et d'autre dudit obstacle pour quitter la chambre d'oscillation par la sortie 90 suivant cette direction C.

L'entrée 84 et la sortie 90 de la chambre d'oscillation sont alignées suivant la direction C qui est perpendiculaire à la direction A d'amenée et d'évacuation du fluide et l'encombrement du compteur entre ses ouvertures d'amenée 26 et d'évacuation 28 est ainsi fortement réduit.

Le compteur peut donc être placé au niveau de ses ouvertures d'amenée 26 et d'évacuation 28 entre deux brides plus rapprochées que dans l'art antérieur.

L'unité de mesure 34 a ainsi une forme générale allongée suivant la direction C qui pourrait prendre différentes orientations dans le plan perpendiculaire à la direction A.

La chambre d'oscillation 86 est délimitée ,d'une part,par la paroi 40 et, d'autre part, par la paroi 46 parallèle à ladite paroi 40 (figs.2, 5 et 6).

Le fluide qui sort de la chambre d'oscillation emprunte le passage 92 qui forme un coude pour donner audit fluide la direction B.

Le passage 92 s'étend de part et d'autre de la paroi 46 dans laquelle un orifice 94 est prévu (fig.2).

A titre de variante, ce passage pourrait être remplacé par deux ou plus de deux passages.

Après avoir traversé l'orifice 94 le fluide pénètre dans la chambre d'évacuation 42 où la paroi 46 dite de guidage sert de guide audit fluide jusqu'à sa sortie par l'ouverture d'évacuation 28.

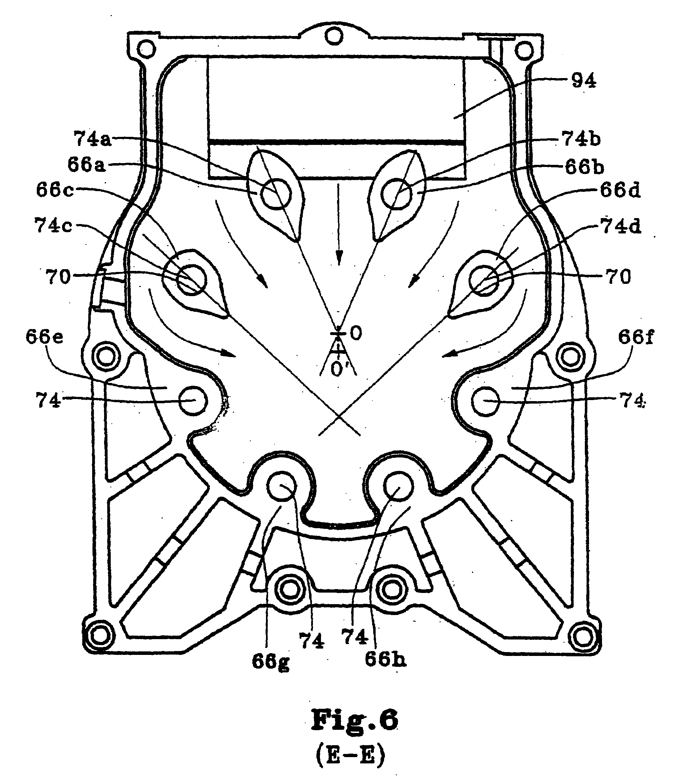

Comme représenté à la figure 6 qui est une vue dans un plan parallèle à la paroi extérieure 44, plusieurs plots 66a-d qui sont disposés le plus près de l'orifice 94 sont profilés en direction de l'ouverture d'évacuation 28, chacun de cesdits plots présentant une portion en forme de pointe tournée vers ladite ouverture.

Les deux plots 66a,b situés le plus près de l'orifice 94 possèdent une orientation définie par un axe représenté en pointillés passant par le centre dudit plot et par sa pointe et les axes de ces plots convergent vers un point O décalé du centre O' de l'ouverture d'évacuation (en projection dans le plan de la figure 6) et qui est situé entre lesdits plots et ledit centre de l'ouverture d'évacuation.

Cet arrangement permet d'éviter à l'écoulement qui emprunte l'ouverture d'évacuation 28 de heurter de plein fouet la paroi de la canalisation 50 située en partie basse sur la figure 2.

Les autres plots 66e-h ne présentent pas le même profil car dans cette configuration ils sont localisés dans une zone où l'écoulement de fluide possède une faible vitesse. Toutefois, dans une configuration ne comportant que quatre plots (non représentée) il est nécessaire que tous les plots soient profilés.

Ainsi que représenté sur les figures 2 à 6, la partie latérale 30 est fabriquée d'une seule pièce avec le bloc central 33 du corps 22 qui inclut l'unité de mesure 34 et l'autre partie latérale 32, fabriquée à part, est ensuite rapportée sur le bloc central de manière à faire office de couvercle.

Lorque le compteur de gaz est en fonctionnement il véhicule du fluide sous une pression de plusieurs bars, aussi, afin d'éviter une déformation de la partie latérale 32, des nervures de renforcement 96 sont prévues sur celle-ci (fig.2 et 7). Ces nervures s'étendent sur la face extérieure de la paroi 46 entre la paroi périphérique 98 reliant perpendiculairement les deux parois 44, 46 et la péripérie de ladite paroi 46.

La paroi latérale rapportée 32 peut également être constituée de plusieurs éléments au lieu d'être réalisée en un seul élément, un des éléments, la paroi 46, étant rapporté sur le bloc central, les autres étant rapportés sur la dite paroi 46.

Toutefois, cette solution est moins efficace du point de vue de l'étanchéité.

A titre de variante, la figure 8 représente une vue d'un compteur de fluide 100 selon l'invention, qui est raccordé aux canalisations 48, 50 par l'intermédiaire de deux parois extérieures 102, 104 opposées en contact respectivement avec deux brides 106, 108 solidaires desdites canalisations.

Des vis de fixation 110, 112 pénètrent respectivement dans des trous 114, 116 (resp.118, 120) pratiqués dans l'épaisseur de chaque bride associée à chaque paroi extérieure ainsi que dans des perforations internes 122 (resp.124) prévues dans des plots 126 (resp.128) disposés à l'intérieur du compteur, de façon analogue à ce qui a été décrit en référence aux figures 2 et 3.

Des chambres internes 130, 132 respectivement pour l'amenée et l'évacuation du fluide sont prévues entre chaque paroi extérieure 102, 104 et une paroi intérieure 134, 136 disposée en regard.

Selon cette variante, le compteur de fluide 100 comprend une unité de mesure disposée dans l'espace 138 entre les deux chambres et qui est allongée suivant la direction longitudinale de l'écoulement dans les canalisations 48, 50 repérée par la flèche notée F au lieu d'être disposée perpendiculairement à celle-ci comme représenté sur les figures 2 et 5.

A la différence de ce qui a été décrit en référence aux figures précédentes, les plots 126 (resp.128) sont disposés à l'intérieur de ces chambres sur une hauteur qui est inférieure à l'écartement d entre les deux parois intérieure 134 (resp.136) et extérieure 102 (resp.104) qui délimitent partiellement lesdites chambres.

La hauteur des plots est ainsi par exemple égale à 0,8d.

Il est important que la hauteur des plots ne soit pas inférieure à 0,5d pour les plots qui sont situés dans une zone où la vitesse de l'écoulement est importante.

En effet, cela permet de s'assurer que l'écoulement circulant dans les chambres 130, 132 parallèlement aux parois intérieure et extérieure sera suffisamment influencé par sa rencontre avec lesdits plots pour détruire les perturbations véhiculées par ledit écoulement.

Dans la configuration représentée sur cette figure 8 l'écoulement provenant de l'ouverture d'amenée 26 qui est fractionné sur la paroi intérieure 134 se répartit dans la chambre d'amenée 130 perpendiculairement aux plots 126, atteint deux orifices de sortie 140, 142 de la chambre situés en haut et en bas de celle-ci et les fractions d'écoulement se rejoignent ensuite en aval desdits orifices pour traverser l'unité de mesure qui peut être constituée, par exemple, d'un oscillateur fluidique tel que représenté sur les figures 2 et 5 ou bien d'un conduit de mesure et de transducteurs ultrasonores qui définissent au moins partiellement entre eux un trajet de mesure dans le fluide.

Par souci de clarté pour l'exposé de cette variante de l'invention, l'unité de mesure n'a pas été représentée sur la figure 8.

L'écoulement provenant de l'unité de mesure entre dans la chambre d'évacuation 132 par deux orifices d'entrée 144, 146 situés en haut et en bas de celle-ci, circule à l'intérieur de ladite chambre perpendiculairement aux plots 128 aménagés de façon identique à ceux de la chambre d'amenée et emprunte alors l'ouverture d'évacuation 28 pour sortir du compteur.

Bien que cela n'ait pas été précisé, les plots disposés dans l'écoulement sont profilés suivant la direction de l'écoulement circulant dans les chambres de manière similaire à ce qui a été décrit en référence aux figures 4 et 6.

## Revendications

1. Compteur de fluide (20) comprenant une paroi extérieure (38) d'épaisseur déterminée sur laquelle une bride (52) raccordée à une canalisation (48) est fixée par l'intermédiaire d'organes de fixation (72) qui pénètrent dans des trous (56, 60) arnénagés respectivement dans l'épaisseur de ladite bride et de ladite paroi extérieure en vue de l'installation dudit compteur sur ladite canalisation, ledit compteur comprenant une ouverture (26) pour l'amenée du fluide qui est aménagée dans la paroi extérieure (38) et derrière laquelle est prévue une chambre dite d'amenée (36) dans laquelle s'écoule le fluide issu de l'ouverture d'amenée, **caractérisé en ce que** le compteur de fluide comprend en outre des plots (64a-h) disposés à l'intérieur de la chambre d'amenée de manière à modifier l'écoulement de fluide et dans lesquels des perforations internes (68) sont prévues dans l'alignement des trous pour les organes de fixation (72) afin de recevoir une partie desdits organes de fixation.

2. Compteur de fluide selon la revendication 1, comprenant une deuxième paroi extérieure (44) opposée à la première, d'épaisseur déterminée, et sur laquelle une autre bride (54) raccordée à une autre canalisation (50) est fixée par l'intermédiaire d'organes de fixation (74) qui pénètrent dans des trous aménagés respectivement dans l'épaisseur de ladite bride et de ladite paroi extérieure en vue de l'installation dudit compteur sur ladite canalisation, ledit compteur comprenant également une ouverture (28) pour l'évacuation du fluide hors du compteur qui est aménagée dans la deuxième paroi extérieure (44) derrière laquelle est prévue une chambre dite d'évacuation (42) dans laquelle s'écoule le fluide avant de s'échapper par ladite ouverture d'évacuation, le compteur de fluide comprenant en outre des plots (66a-h) disposés à l'intérieur de la chambre d'évacuation de manière à modifier l'écoulement de fluide, et dans lesquels des perforations internes sont prévues dans l'alignement des trous pour les organes de fixation (74) afin de recevoir une partie desdits organes de fixation.

3. Compteur de fluide selon la revendication 1 ou 2, comprenant une paroi intérieure (40, 46) disposée en vis-à-vis de l'une des parois extérieures (38, 44) et servant à diriger l'écoulement de fluide selon au moins une direction sensiblement parallèle à ladite paroi intérieure.

4. Compteur de fluide selon la revendication 3, dans lequel la paroi intéiieure (40, 46) est disposée sensiblement perpendiculairement à la direction de l'écoulement de fluide débouchant de l'ouverture d'amenée (26).

5. Compteur de fluide selon la revendication 3 ou 4, dans lequel les plots (64a-h ou 66a-h) sont disposés sensiblement perpendiculairement à la paroi intérieure (40 ou 46).

6. Compteur de fluide selon l'une des revendications 3 à 5, dans lequel au moins une partie (64a-f ou 66a-d) des plots de la chambre d'amenée (36) ou d'évacuation (42) sont profilés dans une direction parallèle à la paroi intérieure (40 ou 46) et qui correspond à la direction de l'écoulement de fluide circulant dans ladite chambre.

7. Compteur de fluide selon l'une des revendications 3 à 6, dans lequel la hauteur des plots est comprise entre 0,5d et d, où d correspond à l'écartement entre les parois intérieure (40, 46) et extérieure (38, 44) définissant la hauteur de la chambre d'amenée ou d'évacuation.

8. Compteur de fluide selon l'une des revendications 1 à 7, dans lequel les plots (64a-h, 66a-h) sont répartis sur une même circonférence.

9. Compteur de fluide selon la revendication 8, dans lequel l'ouverture d'amenée (26) ou d'évacuation (28) est disposée à l'intérieur de ladite circonférence.

10. Compteur de fluide selon l'une des revendications 1 à 9, dans lequel un (ou plusieurs) orifice(s) (76, 78) est (sont) prévu(s) dans la chambre d'amenée (36) pour permettre à l'écoulement de fluide de sortir de ladite chambre d'amenée.

11. Compteur de fluide selon la revendication 10, dans lequel, selon une vue dans un plan parallèle à la paroi intérieure (40), au moins une partie (64a-d) des plots sont profilés en direction de(s) l'orifice(s) de sortie (76, 78) de la chambre d'amenée.

12. Compteur de fluide selon la revendication 11, dans lequel, selon une vue dans un plan parallèle à la paroi intérieure (40), au moins une partie (64a-d) des plots présentent une portion en forme de pointe tournée vers l'(es)orifice(s) de sortie (76, 78) de la chambre d'amenée.

13. Compteur de fluide selon les revendications 8 et 10, dans lequel, selon une vue dans un plan parallèle à la paroi intérieure (40), l'(es) orifice(s) est (sont) disposé(s) en dehors de la circonférence.

14. Compteur de fluide selon les revendications 2 et 6, dans lequel, selon une vue dans un plan parallèle à la paroi intérieure (46), au moins une partie (66a-d) des plots présentent une portion en forme de pointe tournée vers l'ouverture d'évacuation (28) de la chambre d'évacuation (42), l'orientation de chacun desdits plots profilés étant définie par un axe passant par le centre dudit plot et par sa pointe et les axes de ces plots convergeant vers un point O décalé du centre O' de l'ouverture d'évacuation et situé entre lesdits plots et ledit centre de l'ouverture d'évacuation.

15. Compteur de fluide selon l'une des revendications 1 à 14, comprenant une unité de mesure (34) disposée sensiblement perpendiculairement à la direction d'alignement des ouvertures d'amenée et d'évacuation du fluide.

16. Compteur de fluide selon l'une des revendications 1 à 15, comprenant une unité de mesure constituée d'un oscillateur fluidique.

17. Compteur de fluide selon l'une des revendications 1 à 15, comprenant une unité de mesure ultrasonore.

## Claims

1. A fluid meter (20) comprising an outside wall (38) of determined thickness to which a flange (52) connected to a pipe (48) is fixed via fixing members (72) which penetrate into holes (56, 60) organized respectively in the thickness of said flange and in said outside wall in order to install said meter on said pipe, said meter having an opening (26) for fluid feed which is organized in the outside wall (38) and behind which there is provided a "feed" chamber (36) into which the fluid coming from the feed opening flows, the meter being **characterized in that** the fluid meter also has studs (64a-64h) disposed inside the feed chamber so as to modify the fluid flow, and in which internal perforations (68) are provided in alignment with the holes for receiving portions of said fixing members (72).

2. A fluid meter according to claim 1, having a second outside wall (44) opposite to the first, of determined thickness, and on which another flange (54) connected to another pipe (50) is fixed via fixing members (74) which penetrate into holes formed respectively in the thickness of said flange and in the outside wall in order to install said meter on said pipe, said meter also having an opening (28) for exhausting fluid from the meter, which opening is provided in the second outside wall (44) behind which a "exhaust" chamber (42) is provided into which the fluid flows before escaping via said exhaust opening, the fluid meter further comprising studs (66a-66h) disposed inside the exhaust chamber in such a manner as to modify the fluid flow, and in which internal perforations are provided in alignment with the holes for receiving portions of said fixing members (74).

3. A fluid meter according to claim 1 or 2, comprising an inside wall (40, 46) placed facing one of the outside walls (38, 44) and serving to direct the fluid flow in at least one direction that is substantially parallel to said inside wall.

4. A fluid meter according to claim 3, in which the inside wall (40, 46) is disposed substantially perpendicularly to the flow direction of the fluid coming out through the feed opening (26).

5. A fluid meter according to claim 3 or 4, in which the studs (64a-64h or 66a-66h) are disposed substantially perpendicularly to the inside wall (40 or 46).

6. A fluid meter according to any one of claims 3 to 5, in which at least some of the studs (64a-64f or 66a-66d) of the feed chamber (36) or of the exhaust chamber (42) are streamlined in a direction parallel to the inside wall (40 or 46) and corresponding to the flow direction of the fluid circulating in said chamber.

7. A fluid meter according to any one of claims 3 to 6, in which the height of the studs lies in the range 0.5d to d, where d corresponds to the spacing between the inside and outside walls (40, 46; 38, 44) defining the height of the feed chamber or the exhaust chamber.

8. A fluid meter according to any one of claims 1 to 7, in which the studs (64a-64h, 66a-66h) are distributed on a common circumference.

9. A fluid meter according to claim 8, in which the feed opening (26) or the exhaust opening (28) is disposed inside said circumference.

10. A fluid meter according to any one of claims 1 to 9, in which at least one orifice (76, 78) is provided in the feed chamber (36) for allowing the fluid flow to leave said feed chamber.

11. A fluid meter according to claim 10, in which, in a view in a plane parallel to the inside wall (40), at least some of the studs (64a-64d) are streamlined towards the outlet orifices) (76, 78) of the feed chamber.

12. A fluid meter according to claim 11, in which, in a view in a plane parallel to the inside wall (40), at least some of the studs (64a-64d) present portions of pointed shape directed towards the outlet orifice(s) (76, 78) of the feed chamber.

13. A fluid meter according to claims 8 and 10, in which, in a view on a plane parallel to the inside wall (40), the orifice(s) is/are disposed outside the circumference.

14. A fluid meter according to claims 2 and 6, in which, in a view in a plane parallel to the inside wall (46), at least some of the studs (66a-66d) present portions in the form of points directed towards the exhaust opening (28) from the exhaust chamber (42), each of said streamlined studs being oriented on an axis passing through the center of said stud and through its point, the axes of said studs converging on a point O which is offset from the center O' of the exhaust opening and which is situated between said studs and said center of the exhaust opening.

15. A fluid meter according to any one of claims 1 to 14, comprising a measurement unit (34) disposed substantially perpendicularly to the direction in which the fluid feed and exhaust openings are aligned.

16. A fluid meter according to any one of claims 1 to 15, having a measurement unit constituted by a fluidic oscillator.

17. A fluid meter according to any one of claims 1 to 15, comprising an ultrasound measurement unit.

## Patentansprüche

1. Fluidzähler (20) mit einer Außenwand (38) bestimmter Stärke auf der ein Flansch (52), der mit einer Rohrleitung (48) verbunden ist, durch Befestigungsmittel (72) befestigt ist, die in Löcher (56, 60) ragen, die zur Montage des Zählers an der Rohrleitung jeweils in der Stärke des Flansches und der Außenwand angebracht sind, wobei der Zähler eine Öffnung (26) für den Zufluß des Fluids aufweist, die in der Außenwand (38) angeordnet ist und hinter der eine sogenannte Zuflußkammer (36) vorgesehen ist, in die die aus der Zuflußöffnung stammende Flüssigkeit strömt, **dadurch gekennzeichnet, daß** der Fluidzähler ferner Blöcke (64a-h) aufweist, die so im Inneren der Zuflußkammer angeordnet sind, daß das Strömung des Fluids verändert wird und in denen innere Durchgangslöcher (68) vorgesehen sind, die mit den Löchern für die Befestigungsmittel (72) fluchten, um einen Abschnitt der Befestigungsmittel aufzunehmen.

2. Fluidzähler nach Anspruch 1, mit einer zweiten, der ersten gegenüberliegende Außenwand (44) bestimmter Stärke, an der ein weiterer Flansch (54), der mit einer weiteren Rohrleitung (50) verbunden ist, durch Befestigungsmittel (54) befestigt ist, die in Löcher ragen, die zur Montage des Zählers an der Rohrleitung jeweils in der Stärke des Flansches und der Außenwand angebracht sind, wobei der Zähler auch eine Öffnung (28) für den Abfluß des Fluids aus dem Zähler aufweist, die in der zweiten Außenwand (44) angebracht ist, hinter der eine sogenannte Abflußkammer (42) vorgesehen ist, in die das Fluid strömt, bevor es durch die Abflußöffnung ausströmt, wobei der Fluidzähler ferner Blöcke (66a-h) aufweist, die so im Inneren der Abflußkammer (42) angeordnet sind, daß die Strömung des Fluids verändert wird, und in denen innere Durchgangslöcher vorgesehen sind, die mit den Löchern für die Befestigungsmittel (74) fluchten, um einen Teil der Befestigungsmittel aufzunehmen.

3. Fluidzähler nach Anspruch 1 oder 2, mit einer Innenwand (40, 46), die gegenüber einer der Außenwände (38, 44) angeordnet ist und dazu dient, die Strömung des Fluids in wenigstens eine Richtung zu leiten, die im wesentlichen parallel zu der Innenwand ist.

4. Fluidzähler nach Anspruch 3, bei dem die Innenwand (40, 46) im wesentlichen senkrecht zur Strömungsrichtung des Fluids angeordnet ist, das von der Zuflußöffnung (26) einmündet.

5. Fluidzähler nach Anspruch 3 oder 4, bei dem die Blöcke (64a-h oder 66a-h) im wesentlichen senkrecht zu der Innenwand (40 oder 46) angeordnet sind.

6. Fluidzähler nach einem der Ansprüche 3 bis 5, bei dem wenigstens ein Teil (64a-f oder 66a-d) der Blöcke der Zuflußkammer (36) oder der Abflußkammer (42) in einer Richtung parallel zu der Innenwand (40 oder 46) ein Profil aufweisen, das der Strömungsrichtung des Fluids entspricht, daß in der Kammer zirkuliert.

7. Fluidzähler nach einem der Ansprüche 3 bis 6, bei dem die Höhe der Blöcke zwischen 0,5d und d liegt, wobei d dem Abstand zwischen der Innenwand (40, 46) und der Außenwand (38, 44) entspricht, der die Höhe der Zuflußkammer und der Abflußkammer bestimmt.

8. Fluidzähler nach einem der Ansprüche 1 bis 7, bei dem die Blöcke (64a-h, 66a-h) auf dem gleichen Kreisumfang verteilt sind.

9. Fluidzähler nach Anspruch 8, bei dem die Zuflußöffnung (26) oder die Abflußöffnung (28) im Inneren des Kreisumfangs angeordnet ist.

10. Fluidzähler nach einem der Ansprüche 1 bis 9, bei dem eine (oder mehrere) Öffnung(en) (76, 78) in der Zuflußkammer (36) vorgesehen ist (sind), um es der strömenden Flüssigkeit zu ermöglichen, aus der Zuflußkammer zu entweichen.

11. Fluidzähler nach Anspruch 10, bei dem, gemäß einer Ansicht in einer zur Innenwand (40) parallelen Ebene, wenigstens ein Teil der Blöcke (64a-d) ein Profil in Richtung der Austrittsöffnung(en) (76, 78) der Zuflußkammer aufweisen.

12. Fluidzähler nach Anspruch 11, bei dem, gemäß einer Ansicht in einer zur Innenwand (40) parallelen Ebene, wenigstens ein Teil der Blöcke (64a-d) einen Abschnitt aufweisen, der die Form einer Spitze hat, die zu der (den) Ausbittsöffnung(en) (76, 78) der Zuflußkammer gerichtet ist (sind).

13. Fluidzähler nach den Ansprüchen 8 und 10, bei dem, gemäß einer Ansicht in einer zu der Innenwand (40) parallelen Ebene, die Öffnung(en) außerhalb des Kreisumfangs angeordnet ist (sind).

14. Fluidzähler nach den Ansprüchen 2 und 6, bei dem, gemäß einer Ansicht in einer zu der Innenwand (40) parallen Ebene, wenigstens ein Teil der Blöcke (66a-d) einen Abschnitt aufweisen, der die Form einer Spitze hat, die zu der Abflußöffnung (28) der Abflußkammer (42) gerichtet ist, wobei die Ausrichtung jeder der profilierten Blöcke durch eine Achse festgelegt ist, die durch die Mitte des Blocks und durch seine Spitze verläuft, und wobei die Achsen dieser Blöcke zu einem Punkt O zusammenlaufen, der vom Zentrum O' der Abflußöffnung versetzt und zwischen den Blöcken und dem Zentrum der Abflußöffnung gelegen ist.

15. Fluidzähler nach einem der Ansprüche 1 bis 14, der eine Meßeinheit (34) aufweist, die im wesentlichen senkrecht zur Fluchtungsrichtung der Zuflußöffnung und der Abflußöffnung des Fluids angeordnet ist.

16. Fluidzähler nach einem der Ansprüche 1 bis 15, der eine Meßeinheit aufweist, die aus einem Fluid-Oszillator gebildet ist.

17. Fluidzähler nach einem der Ansprüche 1 bis 15, der eine Ultraschall-Meßeinheit aufweist.
